(19) Europäisches Patentamt

European Patent Office

Office européen des brevets

(11) **EP 1 024 631 A1**

(12) ## DEMANDE DE BREVET EUROPEEN

(43) Date de publication:
**02.08.2000 Bulletin 2000/31**

(51) Int Cl.⁷: **H04L 25/03**, H04L 25/06

(21) Numéro de dépôt: **00460012.8**

(22) Date de dépôt: **31.01.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **29.01.1999 FR 9901654**
**01.02.1999 FR 9901266**

(71) Demandeurs:
• **FRANCE TELECOM**
**75015 Paris (FR)**

• **TELEDIFFUSION DE FRANCE**
**75732 Paris Cédex 15 (FR)**

(72) Inventeur: **Palicot, M. Jacques**
**35000 Rennes (FR)**

(74) Mandataire: **Vidon, Patrice**
**Cabinet Patrice Vidon,**
**Immeuble Germanium,**
**80, Avenue des Buttes-de-Coesmes**
**35700 Rennes (FR)**

(54) **Egaliseur à retour de décisions pondérées, et procédé d'égalisation correspondant**

(57) L'invention concerne un égaliseur à retour de décisions, comprenant un filtre direct (FF) (11) et un filtre récursif (FB) (12), dont les coefficients de filtrage sont déterminés (13) de façon à optimiser un critère de qualité prédéterminé. Ledit égaliseur reçoit des données d'entrée (x), alimentant ledit filtre direct (FF), et délivrant des données égalisées (y'), correspondant à la somme des sorties dudit filtre direct (FF) et dudit filtre récursif (FB). Selon l'invention, ledit filtre récursif (FB) est alimenté par des données pondérées ($y_{récursif}$), dont la valeur tient compte desdits données égalisées (y) et d'une information de confiance correspondante.

L'invention introduit donc une pondération, fonction de la confiance, qui permet de lutter efficacement contre la propagation des erreurs.

Fig. 2

**Description**

Le domaine de l'invention est celui de la réception de signaux numériques, notamment lorsque ces derniers sont transmis via des canaux de transmission perturbés. Plus précisément, l'invention concerne l'égalisation de tels signaux.

Un récepteur de signaux numériques peut être décomposé arbitrairement en une série de modules, comprenant une tête radiofréquence (RF), reliée à l'antenne de réception, un convertisseur analogique/numérique, un égaliseur et un décodeur de canal. Ce dernier module a pour rôle d'améliorer les performances de la transmission notamment vis-à-vis du bruit, en fonction du codage correspondant mis en oeuvre à l'émission.

L'objet de l'égaliseur est quant à lui de combattre les imperfections dues au canal de transmission (par exemple les échos, les évanouissements, les "fadings",...). En d'autres termes, il a pour but de remettre en forme le signal reçu, ou encore "d'ouvrir l'oeil" (en référence au classique "diagramme de l'oeil").

L'égalisation repose sur trois éléments :

- un (des) filtre(s) ;
- un critère de qualité ;
- un algorithme de calcul des coefficients de filtrage.

Cet algorithme détermine les coefficients qui optimisent (c'est-à-dire maximisent, par exemple si le critère est l'ouverture de l'oeil, ou minimisent, pas exemple si le critère est une erreur quadratique moyenne (EQM)) le filtrage, donc l'égalisation.

Classiquement, l'égaliseur repose donc sur la mise en oeuvre d'une boucle fermée.

On peut distinguer deux grands types d'égaliseurs, selon leur utilisation :

- les égaliseurs adaptatifs, dont le critère de qualité est déterminé à partir d'une référence, connue du récepteur et émise par l'émetteur (au détriment, bien évidemment, du débit utile) ;
- les égaliseurs auto-adaptatifs (ou autodidactes, ou "blind" en anglais), ne nécessitant pas de références (les décisions après décodage étant, par exemple, dans un fonctionnement dit "décision directed", utilisées comme des références).

On peut par ailleurs distinguer trois grandes structures d'égaliseurs :

- les filtres à réponse impulsionnelle finie (RIF), correspondant à des filtres transversaux classiques ;
- les filtres à réponse impulsionnelle infinie linéaires (RII linéaires), mettant en oeuvre un filtre RIF direct ("forward") et un filtre RIF récursif ("feedback") rebouclé sur la sortie de l'égaliseur ;
- les filtres à réponse impulsionnelle infinie non-linéaires (RII non-linéaires), qui tiennent compte des décisions prises sur la valeur des reçues (ces décisions étant introduites dans le filtre récursif).

L'invention concerne plus précisément ce dernier type d'égaliseurs, classiquement appelés égaliseurs à retour de décisions (ERD, ou DFE en anglais).

Le fonctionnement de l'égaliseur est généralement décomposé en deux phases : une phase de convergence (qui utilise ou non des références), et une phase de poursuite.

L'invention peut être utilisée pour la phase de poursuite, ainsi que pour la phase de convergence. Une autre technique (par exemple à l'aide de références) peut également être utilisée pour la phase de convergence.

Pour plus de précisions sur les différents égaliseurs connus et leur mise en oeuvre, on pourra se référer à l'article d'Odile MACCHI "L'égalisation numérique en communications" (Ann. Télécomun. ; 53, n° 1-2, 1998), qui présente une synthèse sur les différentes techniques existantes.

Comme le précise cet article, l'égaliseur du maximum de vraisemblance (MLSE) est le plus efficace. Il présente toutefois divers inconvénients, et notamment une grande complexité, qui ne permette pas sa mise en oeuvre en pratique (en particulier pour des modulations à grand nombre d'états).

L'ERD apparaît donc être le système offrant le meilleur rapport entre les performances d'égalisation et la complexité de mise en oeuvre.

Cependant, il souffre d'un défaut inhérent à sa structure même : le phénomène de propagation des erreurs. Ce phénomène est dû à la fois à l'injection d'erreurs dans la partie récursive de l'égaliseur, et à la divergence de l'algorithme de calcul des coefficients de filtrage, lorsque le critère de qualité est faussé par ces erreurs. Il est d'ailleurs très difficile de distinguer la part respective de chaque contribution dans la divergence de l'ERD.

Ce problème est un problème majeur, bien connu et non résolu efficacement.

A cause de ce risque, difficilement quantifiable et prévisible, on constate que l'ERD est très peu utilisé en pratique. Les seules utilisations connues concernent des canaux très faiblement perturbés, par exemple pour la diffusion de télévision numérique sur réseau câblé (proposition américaine (FCC).

Une technique a cependant été proposée par J. LABAT, O. MACCHI et C. LAOT, dans l'article "Adaptive Décision Feedback Equalization : can you skip the training period ?" (IEEE trans. On com., vol. 46, n° 7, July 98). Elle consiste à faire une égalisation ERD uniquement lorsque le canal est déjà égalisé correctement par une autre méthode. Cela suppose une communication structurelle et algorithme réversible, en fonction d'un certain critère (l'EQM dans cet article).

La mise en oeuvre de cette technique s'avère donc relativement lourde et complexe.

Une autre méthode, bien sûr, consiste à transmettre très régulièrement une séquence de référence, suffisamment longue, afin de réinitialiser l'ERD lors d'une propagation d'erreurs. L'inconvénient évident d'une telle méthode est une consommation importante de débit inutile pour le service. Il ne s'agit donc clairement pas d'une solution d'avenir, alors que la tendance est, pour tous les services, à l'augmentation de débit.

L'invention a notamment pour objectif de pallier ces différents inconvénients de l'état de l'art.

Plus précisément, un objectif de l'invention est de fournir une technique d'égalisation à retour de décisions qui limite l'effet des propagations d'erreurs, par rapport aux techniques connues.

Un autre objectif de l'invention est de fournir une telle technique d'égalisation, qui soit peu complexe à mettre en oeuvre par rapport à la technique déjà citée de Labat et Macchi.

L'invention a également pour objectif de fournir une telle technique d'égalisation, qui ne nécessite pas de commutation avec d'autres méthodes d'égalisation, dans certaines situations.

Ces objectifs, ainsi que d'autres qui apparaîtront par la suite sont atteints, à l'aide d'un égaliseur à retour de décisions, comprenant un filtre direct (FF) et un filtre récursif (FB), dont les coefficients de filtrage sont déterminés de façon à optimiser un critère de qualité prédéterminé, ledit égaliseur recevant des données d'entrée, alimentant ledit filtre direct (FF), et délivrant des données égalisées, correspondant à la somme des sorties dudit filtre direct (FF) et dudit filtre récursif (FB).

Selon l'invention ledit filtre récursif (FB) est alimenté par des données pondérées, dont la valeur tient compte desdites données égalisées et d'une information de confiance correspondante.

Ainsi, le symbole (ou donnée) introduit dans le filtre récursif n'est plus (à tout le moins pas systématiquement) la donnée égalisée, qui est parfois porteuse d'une erreur qui va se propager. Pour éviter cette propagation, cette donnée est modifiée d'une façon adéquate, lorsque la confiance affectée à la donnée égalisée n'est pas suffisante.

L'invention introduit donc une pondération, fonction de la confiance, qui permet de lutter efficacement contre la propagation des erreurs.

On notera que l'invention peut être mise en oeuvre pour la phase de poursuite de l'égalisation, mais également pour la phase de convergence.

De façon avantageuse, l'optimisation dudit critère de qualité tient compte également de ladite information de confiance.

En d'autres termes, l'erreur prise en compte pour piloter l'algorithme de calcul des coefficients de filtrage n'est plus systématiquement la différence entre la donnée égalisée et le symbole le plus probable correspondant. Au moins lorsque la confiance est insuffisante, cette erreur est adaptée, de façon à réduire le phénomène de propagation des erreurs.

Selon une approche préférentielle de l'invention, l'égaliseur comprend des moyens de calcul de ladite information de confiance dans ladite donnée égalisée, et des moyens d'utilisation de ladite information de confiance, alimentant ledit filtre récursif (FB).

Différentes méthodes peuvent être mises en oeuvre pour le calcul et pour l'utilisation de l'information de confiance.

Selon un premier mode de réalisation avantageux de l'invention, ladite information de confiance tient compte d'au moins une distance entre ladite donnée égalisée et le symbole le plus probable correspondant à ladite donnée.

Notamment, ladite distance peut être comparée à au moins un seuil, le traitement de ladite donnée étant fonction du résultat du seuillage.

Dans ce cas en particulier, ledit au moins un seuil peut être optimisé itérativement. Bien sûr; il peut également être fixe, ou réglable à la demande par l'utilisateur.

Selon une réalisation particulière de l'invention, l'égaliseur met en oeuvre un seuil unique, et en ladite donnée pondérée alimentant le filtre récursif (FB) est :

- ledit symbole le plus probable, si ladite distance est inférieure audit seuil ;
- ladite donnée égalisée, si ladite distance est supérieure audit seuil.

Dans ce cas, l'optimisation d'un critère de qualité peut avantageusement consister à minimiser une erreur valant :

- ledit symbole le plus probable moins ladite donnée égalisée, si ladite distance est inférieure audit seuil ;
- zéro, si ladite distance est supérieure audit seuil.

Selon une variante avantageuse, ladite distance est décomposée en deux composantes, traitées indépendamment.

Selon un second mode de réalisation avantageux de l'invention, ladite information de confiance vaut :

$$C_y = \frac{\mathrm{Min}\,(dx^+,\, dy^-,\, dx^-,\, dy^+)}{\Delta}$$

où :

$dx^+$, $dy^-$, $dx^-$, et $dy^+$, sont les quatre distances, selon les axes x et y, entre ladite donnée égalisée et la frontière définissant la zone d'association d'une donnée audit symbole le plus probable ;

$\Delta$ est la distance entre ladite frontière et ledit symbole le plus probable.

Alors, ladite donnée pondérée alimentant ledit filtre récursif (FB) est préférentiellement :

$$y_{\text{récursif}} = C_y.\ y' + (1-C_y).y$$

où :

y' est ledit symbole le plus probable ;
y est ladite donnée égalisée.

Cette approche peut être généralisée en utilisant l'équation

$$Y_{\text{récursif}} = g(C_y).\ y' + (1-g'(C_y)).y$$

où :

g et g' sont des fonctions prédéterminées.
Préférentiellement, au moins une desdites fonctions prédéterminées g et g' est une fonction renforçant l'effet des fortes confiances et diminuant l'effet des faibles confiances. Par exemple, au moins une desdites fonctions prédéterminées g et g' est une fonction sigmoïde.
Avantageusement, lesdites fonctions g et g' sont la même fonction.
De la même façon, le calcul de l'erreur peut être généralisé par

$$\text{erreur} = f(C_y).\ (y' - y)$$

La fonction f est préférentiellement du même type que les fonctions g et g'.
Par ailleurs, de façon avantageuse, l'optimisation d'un critère de qualité peut consister à minimiser :

$$\text{erreur} = C_y.\ (y' - y)$$

où :

y' est ledit symbole le plus probable ;
y est ladite donnée égalisée.

Selon une autre approche de l'invention, on tient compte de deux distances, correspondant chacune à deux composantes définies respectivement selon deux axes perpendiculaires.
Dans ce cas, ladite information de confiance est avantageusement décomposée en deux composantes (I, Q):

$$CI_y = \min(dx^+, dx^-)/\Delta$$

$$CQ_y = \min(dy^+, dy^-)/\Delta$$

où :

dx⁺, dy⁻, dx⁻, et dy⁺, sont les quatre distances, selon les axes x et y, entre ladite donnée égalisée et la frontière définissant la zone d'association d'une donnée audit symbole le plus probable ;
Δ est la distance entre ladite frontière et ledit symbole le plus probable.

Préférentiellement, ladite donnée pondérée alimentant ledit filtre récursif (FB) est également décomposée en deux composantes :

$$Y_{\text{récursif}}I = CI_y(yI') + (1-CI_y)(yI)$$

$$Y_{\text{récursif}}Q = CQ_y(yQ') + (1-CQ_y)(yQ)$$

où

yI' et yQ' sont les deux composantes dudit symbole le plus
probable ;
yI et yQ sont les deux composantes de ladite donnée égalisée.

Dans ce cas, de façon avantageuse, l'optimisation d'un critère de qualité consiste à minimiser les deux éléments :

$$\text{erreur}I = CI_y(yI'-yI)$$

$$\text{erreur}Q = CQ_y(yQ'-yQ).$$

De la même façon que précédemment les équations peuvent être généralisées avec des fonctions $g_1$ et $g_4$ et $f_1$ et $f_2$ du même type que les fonctions $g_1$ et g' et f discutées plus haut, soit

$$Y_{\text{récursif}}I = g_1(CI_y)(yI') + (1-g_2(CI_y))(yI)$$

$$Y_{\text{récursif}}Q = g_3(CQ_y)(yQ') + (1-g_4(CQ_y))(yQ)$$

$$\text{erreur}I = f_1(CI_y)(yI'-yI)$$

$$\text{erreur}Q = f_2(CQ_y)(yQ'-y'Q)$$

Bien sûr, l'égaliseur de l'invention peut mettre en oeuvre simultanément en oeuvre les deux approches décrites ci-dessus, sous une forme adaptée.

Selon un aspect préférentiel de l'invention, on prévoit de traiter différemment lesdites données égalisées, lorsque celles-ci se trouvent à l'extérieur de la constellation définie par les symboles possibles.

On constate en effet que le risque d'erreur reste faible, même lorsque la confiance est faible.

Notamment, les données se trouvant à l'extérieur de ladite constellation peuvent être projetées sur le bord le plus proche de ladite constellation.

Après projection, on détermine avantageusement une donnée pondérée de la même façon que pour les données se trouvant à l'intérieur de ladite constellation.

L'invention concerne également le procédé d'égalisation mis en oeuvre par l'égaliseur décrit ci-dessus. Un tel procédé d'égalisation à retour de décisions comprend les étapes suivantes :

- filtrage direct (FF) de données d'entrée ;
- filtrage récursif (FB) ;
- délivrance de données égalisées correspondant à la somme des sorties desdits filtrages direct et récursif ;
- détermination des coefficients de filtrage desdits filtrages direct et récursif ;
- détermination d'une information représentative de la confiance affectée à ladite donnée égalisée ;
- délivrance audit filtrage récursif d'une donnée pondérée, tenant compte de ladite donnée égalisée et de ladite information de confiance.

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :

- la figure 1 est un schéma de principe, connu en soi, d'un égaliseur DFE ;
- la figure 2 présente un égaliseur selon l'invention ;
- la figure 3 illustre le principe de calcul de la confiance dans l'égaliseur de la figure 2, selon un premier mode de mise en oeuvre ;
- la figure 4 illustre le principe de calcul de la confiance dans l'égaliseur de la figure 2, selon un second mode de mise en oeuvre,
- les figures 5A à 5E sont cinq exemples illustrant l'efficacité de l'égalisation selon l'invention, par rapport à un ERD classique.

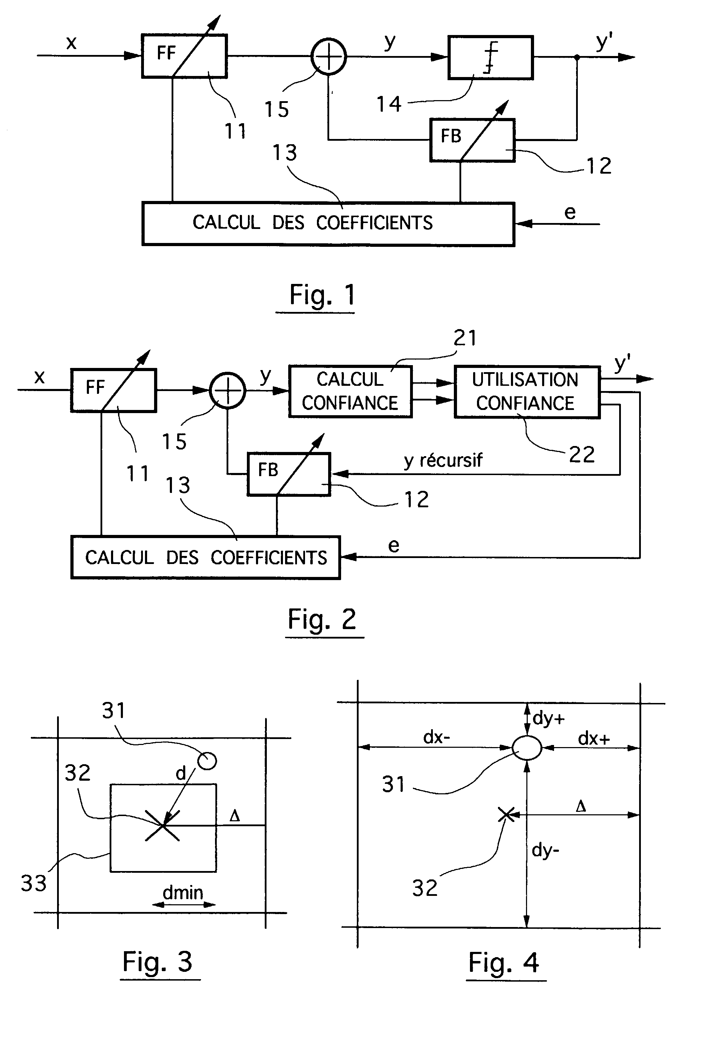

La figure 1 présente le principe, connu en soi, et déjà commenté en préambule, d'un égaliseur à retour de décisions.

Cet égaliseur reçoit une donnée x, correspondant à une donnée émise, ayant subi les perturbations du canal de transmission, et délivre une donnée estimée correspondante y'. Il comprend un premier filtre direct (FF) 11, et un filtre récursif (FB) 12, dont les coefficients de filtrage sont calculés par un module 13 mettant en oeuvre un algorithme d'optimisation, en fonction d'un critère prédéterminé.

Le filtre direct 11 est alimenté par le symbole (ou donnée) reçu x, et le filtre récursif 12 par le symbole estimé y'. Ce dernier symbole est délivré par un module 14 d'estimation, qui détermine le symbole le plus probable, par une analyse de la somme y 15 de la sortie des deux filtres 11 et 12.

Le calcul 13 des coefficients met par exemple en oeuvre un algorithme de minimisation de l'erreur quadratique moyenne (LMS-DD), tenant compte de l'erreur e correspondant à la différence entre y et y'.

La figure 2 illustre un égaliseur selon l'invention. Les éléments déjà présents dans la figure 1 conservent la même numérotation. On voit apparaître deux nouvelles fonctions (qui peuvent, dans certains modes de réalisation, être cumulées) :

- calcul de la confiance 21 de la sortie y du filtre ;
- utilisation 22 de cette confiance.

L'information de confiance est notamment utilisée pour adapter la valeur ($y_{récursif}$) qui est introduite dans le filtre récursif 12 et/ou pour adapter la valeur de l'erreur e prise en compte pour le calcul 13 des coefficients de filtrage. Ainsi, ce n'est pas la valeur y' qui est prise en compte en entrée du filtre récursif, mais une valeur adaptée $y_{récursif}$, permettant d'obtenir une égalisation plus efficace, et notamment une propagation limitée des erreurs.

A titre d'exemples, on présente ci-après deux techniques pouvant être mis en oeuvre pour calculer la confiance de la sortie du filtre.

Dans ces deux cas, les coefficients des filtres directs et récursifs sont pilotés par un algorithme LMS-DD.

La première technique, illustrée par la figure 3, repose sur un calcul de la distance entre la donnée y 31 effectivement calculée par le filtre, et la décision la plus proche 32, c'est-à-dire le symbole plus probable (et donc, a priori, celui qui serait décidé dans le cas de l'ERD classique).

Dans le même temps, on met en oeuvre la règle d'utilisation de cette confiance (c'est-à-dire de la distance d) suivante :

- si la confiance est suffisante, c'est-à-dire supérieure à un seuil $d_{min}$, alors la donnée introduite dans le filtre récursif 12 $y_{récursif}$ est égale à la décision ;
- sinon, la donnée $y_{récursif}$ est égale à la sortie du filtre y avant décision.

La mise en oeuvre de cette règle est excessivement simple, comme cela apparaît clairement sur la figure 3. En effet, l'utilisateur définit le seuil minimal de

confiance, appelé $d_{min}$, normalisé à $\Delta$ ($\Delta$ étant la distance entre la décision et la frontière avec la zone affectée à une décision voisine).

Autour de l'éventuel symbole décidé, on trace un carré 33, ou un cercle de dimension $d_{min}$. Si la donnée y en sortie de l'égaliseur est à l'intérieur de ce carré, alors la donnée introduite dans le filtre récursif 12 est :

$$y_{récursif} = \text{décision}$$

sinon :

$$y_{récursif} = y.$$

A ce niveau, d'autres règles peuvent, bien entendues, être utilisées.

En ce qui concerne l'erreur e prise en compte dans l'algorithme de calcul des coefficients de filtrage, la règle peut être la suivante :

si $d < d_{min}$     alors :     erreur = $y_{estimé}$ - y
       sinon :     erreur = 0

Les performances de cet égaliseur peuvent être améliorées en gérant de manière différente les points extérieurs de la constellation (cette remarque est d'ailleurs valable quelle que soit le mode de réalisation, avec les adaptations correspondantes). En effet, lorsque la sortie du filtre est à l'extérieur de la constellation, même à distance supérieure à $d_{min}$, le risque d'erreur est très faible, et dans ce cas la sortie y est projetée sur le bord de la constellation.

Plus précisément, en prenant comme exemple de modulation une MAQ 64, on sait que la distance entre un axe et les points extérieurs est 7$\delta$ (2$\delta$ étant la distance entre deux points consécutifs). Selon l'approche proposée ci-dessus, lorsque la distance de l'échantillon considéré est supérieure à 7$\delta$ + $d_{min}$, on rabat l'échantillon à la distance de 7$\delta$ selon l'axe (ou les axes) considérés. En d'autres termes :

     si Dx > 7$\delta$ + $d_{min}$, alors Dx = 7$\delta$
     si Dy > 7$\delta$ + $d_{min}$, alors Dy = 7$\delta$

Ensuite, on applique de façon inchangée les règles sur $y_{récursif}$ et sur l'erreur e.

La valeur de $d_{min}$ peut être fixée par l'utilisateur. On peut également prévoir qu'une valeur optimale de $d_{min}$ est recherchée de manière automatique, à l'aide d'un algorithme itératif.

Le second mode de réalisation proposé, illustré par la figure 4, consiste à calculer la confiance à l'aide de l'équation suivante :

$$C_y = \frac{\text{Min}(dx^+, dy^-, dx^-, dy^+)}{\Delta}$$

La règle proposée selon cette seconde méthode est avantageusement la suivante :

-    $y_{récursif} = C_y \cdot y_{estimé} + (1 - c_y) \cdot y$
-    erreur = $c_y \cdot (y_{estimé} - y)$

L'équation de calcul de $y_{récursif}$ peut être généralisée de la façon suivante :

$$Y_{récursif} = g_1(c_y) \cdot y_{estimé} + (1 - g_2(c_y)) \cdot y$$

où $g_1$ et $g_2$ sont des fonctions non linéaires prédéterminées, visant préférentiellement à privilégier les fortes confiances, et au contraire à réduire les faibles confiances. Il peut notamment s'agir d'une fonction sigmoïde, telle que celles mises en oeuvre dans les systèmes de neurones. Les fonctions $g_1$ et $g_2$ peuvent bien sûr être égales : $g_1 = g_2 = g$.

On notera que, lorsque g est la fonction identité, on retrouve l'équation précédente.

De même, le calcul de l'erreur peut être généralisé par :

$$\text{Erreur} = f(c_y)(y_{estimé} - y)$$

Où f est également une fonction prédéterminée de la même façon que les fonctions $g_1$ et $g_2$ (identité, sigmoïdes, ...).

A nouveau, on peut traiter différemment les points se trouvant à l'extérieur de la constellation, en effectuant la projection suivante (cas d'une MAQ 64) :

     si Dx > 7$\delta$     alors Dx = 7$\delta$
     si Dy > 7$\delta$     alors Dy = 7$\delta$

Ensuite, on applique la règle proposée ci-dessus.

Bien sûr, d'autres modes de réalisation peuvent être envisagés. Notamment, on peut "mélanger" les approches définies ci-dessus, par exemple en prévoyant, dans le mode de réalisation illustré par la figure 3, plusieurs carrés (ou cercles), correspondant à plusieurs seuils, un traitement particulier étant prévu pour chacun de ces seuils.

On peut également prévoir d'appliquer la première règle lorsque la distance est inférieure à $d_{min}$, et la seconde règle dans le cas contraire.

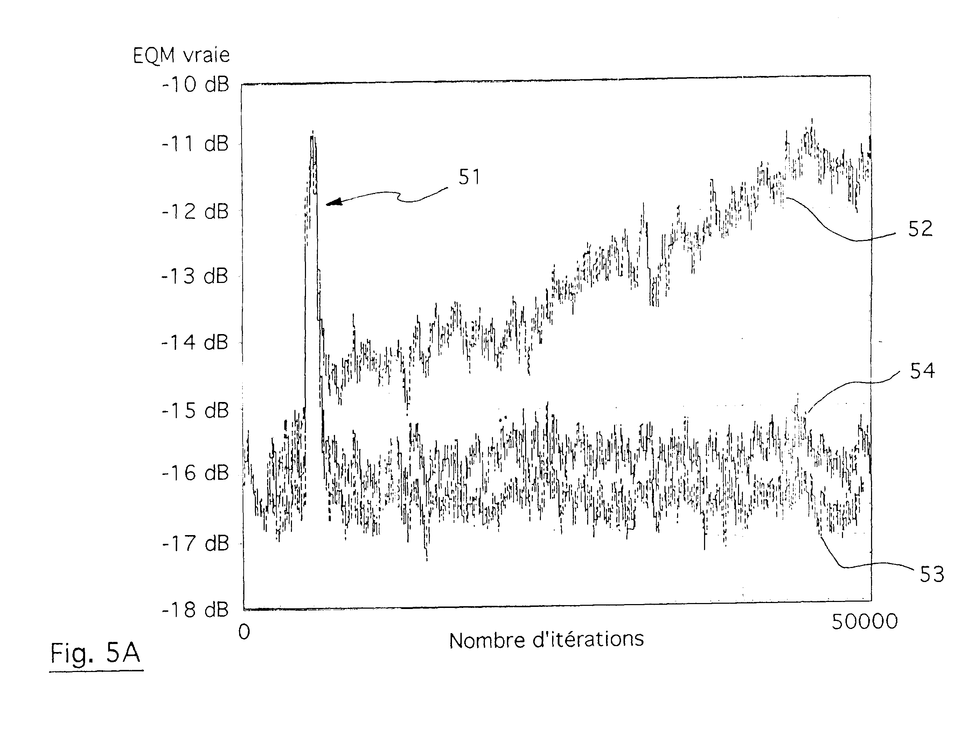

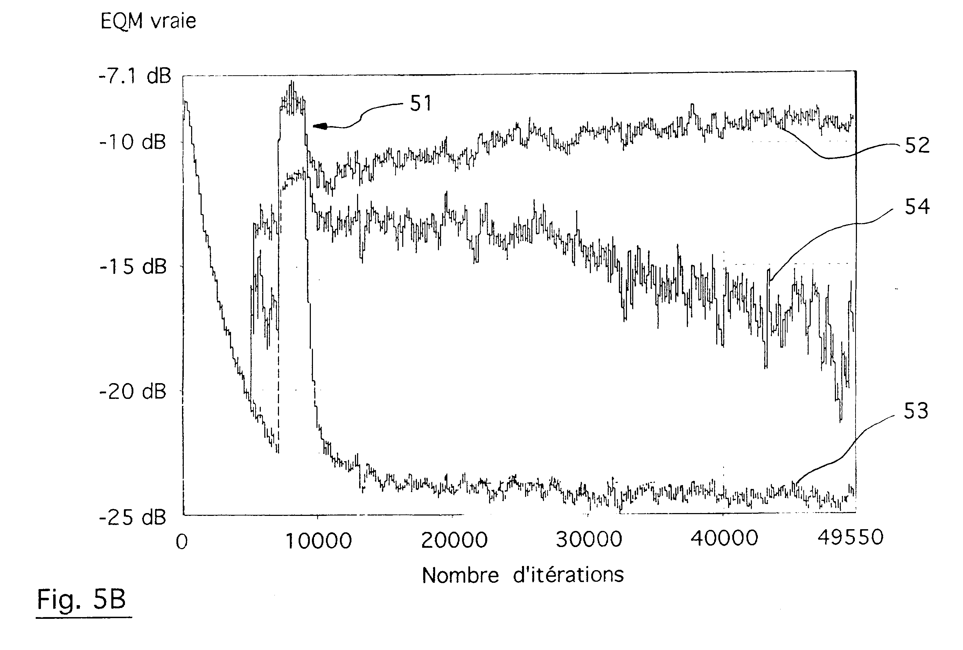

Les figures 5A et 5B illustrent des simulations montrant l'efficacité de la technique de l'invention.

Le contexte de simulation est issu du document "association des fonctions d'égalisation, de synchronisation et de décodage canal pour les modulations à grande efficacité spectrale" de D. Mottier (thèse INSA Rennes ; novembre 1997). Il s'agit de la transmission d'une modulation MAQ 64, suivant le schéma DVB-câble à travers deux canaux stationnaires différents (figures 5A et 5B).

Le premier (figure SA) correspond à un canal légèrement perturbé, comprenant un écho de 10 dB à 30 Ts. Le second canal (figure 5B) est un canal très fortement perturbé, et donc très difficile à égaliser, défini par la réponse impulsionnelle suivante :

H = (0,8264 ; -0,1653 ; 0,8512 ; 0,1636 ; 0,81)

Pour ces deux canaux, une perturbation 51 a été volontairement ajoutée pendant la phase de poursuite des égaliseurs, afin de générer un phénomène de propagation d'erreur dans le cas 52 de l'ERD classique. Tous les égaliseurs illustrés, optimisés par un LMS-DD, ont convergé à l'aide d'une séquence d'apprentissage.

On a représenté les résultats obtenus avec un ERD optimal 53 (ERD supervisé), qui est un égaliseur "virtuel" pour lequel les données utilisées pour le filtre récursif et l'algorithme sont les données émises, qui est généralement considéré comme l'ERD ayant les performances optimales, avec lesquelles il faut comparer un égaliseur réel.

On constate sur ces deux figures que l'ERD classique 52 part très rapidement en propagation d'erreurs, lorsque la non stationnarité 51 apparaît. En revanche, dans les deux cas, la technique de l'invention 54 (ERDP, pour ERD pondéré), reste stable. On utilise ici le premier mode de réalisation décrit, avec une valeur de $d_{min}$ = 0,6.

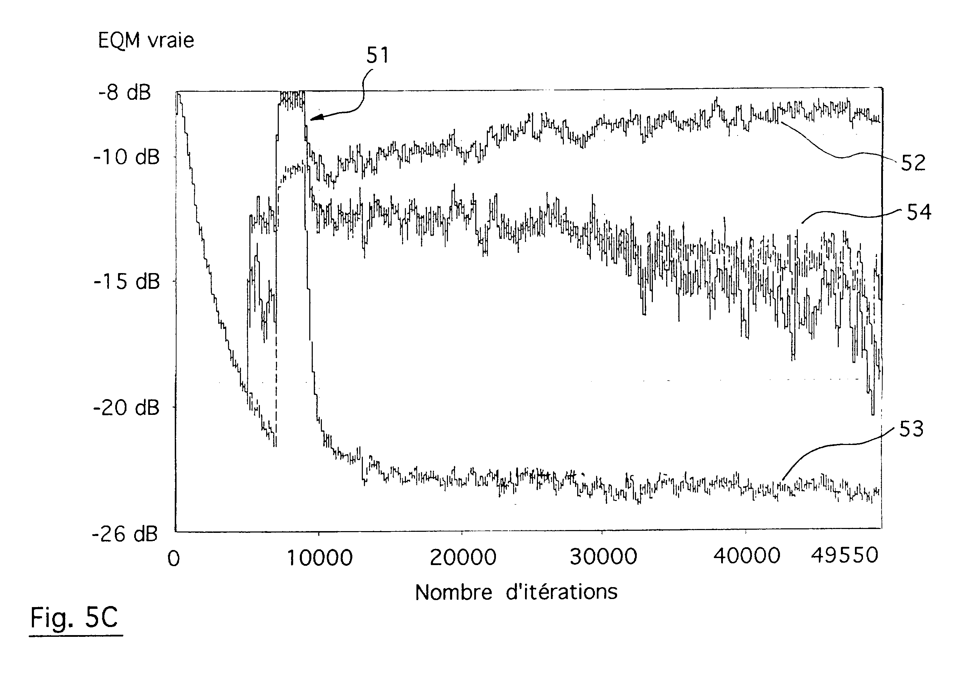

La figure 5C illustre la même situation que la figure 5B, lorsque l'on utilise le second mode de réalisation décrit. A nouveau, on constate qu'il n'y a pas de divergence de la courbe 54, contrairement à l'ERD classique 52.

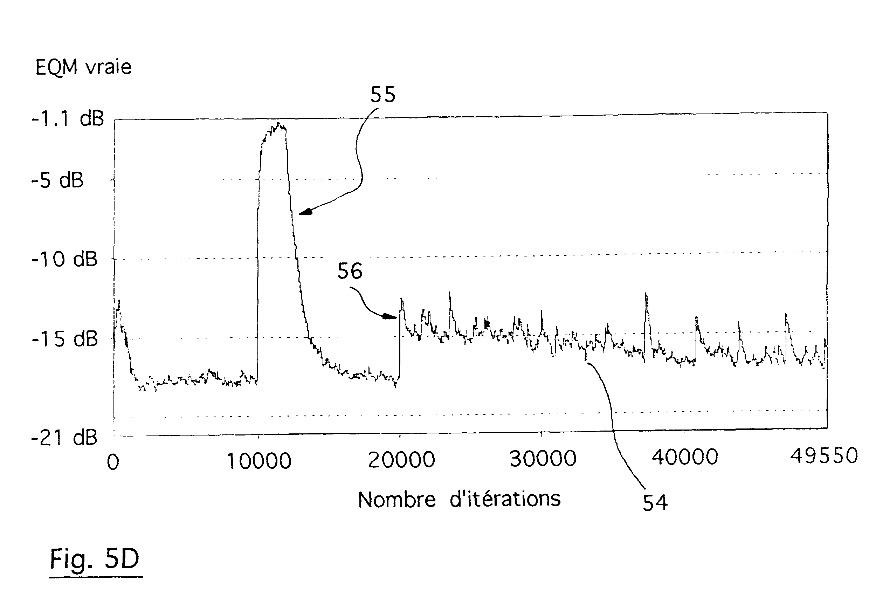

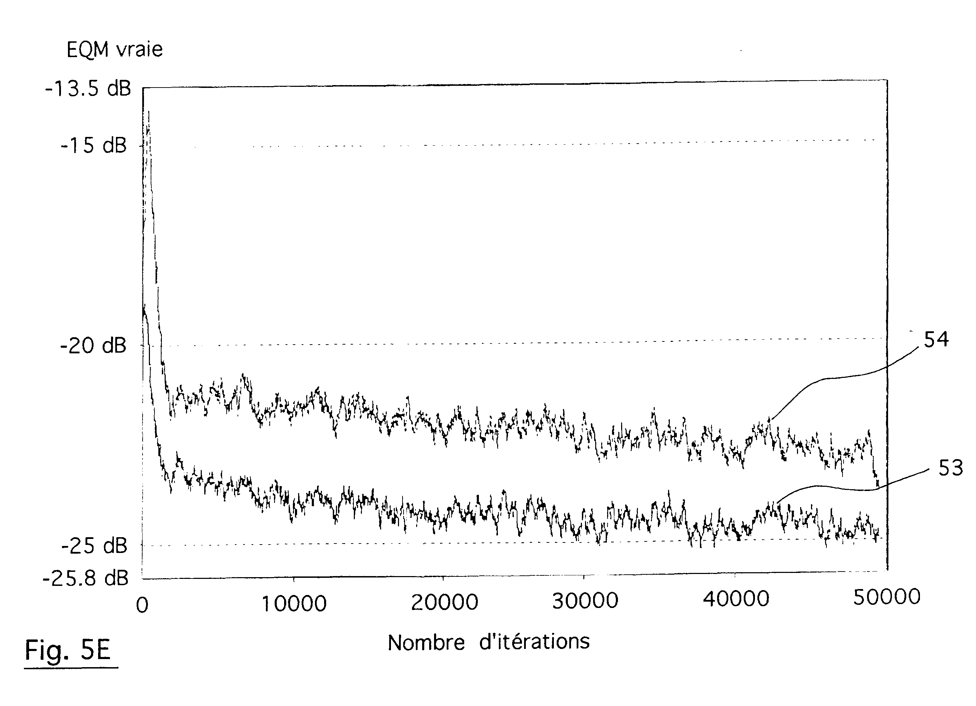

La figure 5D présente quant à elle un exemple de traitement d'une modulation MAQ 16 soumise successivement :

- à un bruit 55 de 16 dB (à l'instant correspondant à l'itération 10 000) ;
- à un écho 56 (à l'instant correspondant à l'itération 20000).

A nouveau, on constate que, malgré ces deux perturbations importantes, il n'y a pas de divergence due à la propagation des erreurs.

Dans les quatre exemples ci-dessus, on se trouve en phase de poursuite, la phase de convergence ayant été préalablement effectuée (par exemple à l'aide d'une séquence de référence). Dans l'exemple de la figure 5E, en revanche, on montre qu'un fonctionnement autodidacte peut être obtenu selon l'invention. Il s'agit ici d'une modulation MAQ16 soumise à un bruit de 30 dB. Les phases de convergence et de poursuite sont assurées en mettant en oeuvre le second mode de réalisation.

Selon une autre approche, qui permet d'obtenir une efficacité encore meilleure, la distance n'est plus calculée globalement, mais indépendamment sur chaque axe, comme cela est illustré en figure 4. Dans ce cas, on applique indépendamment les lois proposées plus haut suivant chaque axe.

En effet, un point peut ne pas respecter une loi, alors qu'une de ces composantes I ou Q la respecte. Il s'ensuit une augmentation du bruit de calcul et une dégradation des performances par rapport au cas où les axes sont traités séparément.

Ainsi, dans l'exemple de la figure 4, on constate que la confiance globale $C_y$, est nulle mais que :

- selon l'axe I : $CI_y$ est bon
- selon l'axe Q : $CQ_y$ = 0

On propose donc d'effectuer les deux calculs indépendants de confiance suivants :

$$CI_y = \min (dx^+, dx^-)/\Delta$$

$$CQ_y = \min (dy^+, dy^-)/\Delta$$

L'utilisation de ces confiances se fait comme pour la méthode précédente :

$$Y_{récursif} I = CI_y(yI') + (1-CI_y)(yI)$$

$$Y_{récursif}Q = CQ_y(yQ') + (1-CQ_y)(yQ)$$

et

$$erreurI = CI_y(yI'-yI)$$

$$erreurQ = CQ_y(yQ'-yQ).$$

De même que décrit précédemment, ces équations peuvent être généralisées à l'aide de fonctions visant préférentiellement à renforcer les fortes confiances et réduire l'effet des faibles confiances. Il s'agit par exemple de fonctions sigmoïdes. Ces fonctions peuvent être différentes les unes des autres, ou être les mêmes.

Les équations peuvent alors s'écrire :

$$Y_{récursif}I = g_1(CI_y)(yI') + (1-g_2(CIy))(yI)$$

$$Y_{récursif}Q = g_3(CQ_y)(yQ') + (1-g_4(CQ_y))(yQ)$$

où

yI' et yQ' sont les deux composantes dudit symbole le plus probable ;
yI et yQ sont les deux composantes de ladite donnée égalisée ; et

$$erreurI = f_1(CI_y)(yI'-yI)$$

$$\text{erreurQ} = f_2(CQ_y)(yQ'-yQ)$$

où $f_1$ et $f_2$ sont des fonctions prédéterminées.

De même, pour la première loi discutée, on peut vérifier sur chaque axe que la distance est comprise dans le carré de dimension $d_{min}$.

## Revendications

1. Egaliseur à retour de décisions, comprenant un filtre direct (FF) (II) et un filtre récursif (FB) (12), dont les coefficients de filtrage sont déterminés (13) de façon à optimiser un critère de qualité prédéterminé, ledit égaliseur recevant des données d'entrée (x), alimentant ledit filtre direct (FF), et délivrant des données égalisées (y'), correspondant à la somme des sorties dudit filtre direct (FF) et dudit filtre récursif (FB), caractérisé en ce que ledit filtre récursif (FB) est alimenté par des données pondérées ($y_{récursif}$), dont la valeur tient compte desdits données égalisées (y) et d'une information de confiance correspondante.

2. Egaliseur à retour de décisions selon la revendication 1, caractérisé en ce que l'optimisation (13) dudit critère de qualité tient compte également de ladite information de confiance.

3. Egaliseur à retour de décisions selon l'une quelconque des revendications 1 et 2, caractérisé en ce qu'il comprend des moyens (21) de calcul de ladite information de confiance dans ladite donnée égalisée, et des moyens (22) d'utilisation de ladite information de confiance, alimentant ledit filtre récursif (FB).

4. Egaliseur à retour de décisions selon l'une quelconque des revendications 1 à 3, caractérisé en ce que ladite information de confiance tient compte d'au moins une distance (d) entre ladite donnée égalisée et le symbole le plus probable correspondant à ladite donnée.

5. Egaliseur à retour de décisions selon la revendication 4, caractérisé en ce que ladite distance (d) est comparée à au moins un seuil ($d_{min}$), le traitement de ladite donnée étant fonction du résultat du seuillage.

6. Egaliseur à retour de décisions selon la revendication 5, caractérisé en ce que ledit au moins un seuil est optimisé itérativement.

7. Egaliseur à retour de décisions selon l'une quelconque des revendications 5 et 6, caractérisé en ce qu'il met en oeuvre un seuil unique, et en ce que ladite donnée pondérée alimentant le filtre récursif (FB) est :

- ledit symbole le plus probable, si ladite distance est inférieure audit seuil ;
- ladite donnée égalisée, si ladite distance est supérieure audit seuil.

8. Egaliseur à retour de décisions selon les revendications 2 et 7, caractérisé en ce que l'optimisation d'un critère de qualité consiste à minimiser une erreur valant :

- ledit symbole le plus probable moins ladite donnée égalisée, si ladite distance est inférieure audit seuil ;
- zéro, si ladite distance est supérieure audit seuil.

9. Egaliseur à retour de décisions selon les revendications 2 et 8, caractérisé en ce que ladite distance est décomposée en deux composantes, traitées indépendamment.

10. Egaliseur à retour de décisions selon la revendication 4, caractérisé en ce que ladite information de confiance vaut :

$$C_y = \frac{\text{Min}\ (dx^+,dy^-,dx^-dy^+)}{\Delta}$$

où :

dx⁺, dy⁻, dx⁻, et dy⁺, sont les quatre distances, selon les axes x et y, entre ladite donnée égalisée et la frontière définissant la zone d'association d'une donnée audit symbole le plus probable ;
$\Delta$ est la distance entre ladite frontière et ledit symbole le plus probable.

11. Egaliseur à retour de décisions selon la revendication 10, caractérisé en ce que ladite donnée pondérée alimentant ledit filtre récursif (FB) est :

$$y_{récursif} = g(C_y).\ y' + (1-g'(C_y)).y$$

où :

y' est ledit symbole le plus probable ;
y est ladite donnée égalisée ;
g et g' sont des fonctions prédéterminées.

12. Egaliseur à retour de décisions selon la revendication 11, caractérisé en ce qu'au moins une desdites fonctions prédéterminées g et g' est la fonction identité.

13. Egaliseur à retour de décisions selon la revendication 12, caractérisé en ce qu'au moins une desdites fonctions prédéterminées g et g' est une fonction renforçant l'effet des fortes confiances et diminuant l'effet des faibles confiances.

14. Egaliseur à retour de décisions selon la revendication 13, caractérisé en ce qu'au moins une desdites fonctions prédéterminées g et g' est une fonction sigmoïde.

15. Egaliseur à retour de décisions selon l'une quelconque des revendications 13 et 14 caractérisé en ce que lesdites fonctions g et g' sont la même fonction.

16. Egaliseur à retour de décisions selon l'une quelconque des revendications 13 à 15 caractérisé en ce que l'optimisation d'un critère de qualité consiste à minimiser :

$$\text{erreur} = f(C_y). \, (y' - y)$$

où :

   y' est ledit symbole le plus probable ;
   y est ladite donnée égalisée ;
   f est une fonction prédéterminée.

17. Egaliseur à retour de décisions selon la revendication 16, caractérisé en ce que ladite fonction prédéterminée f est la fonction identité.

18. Egaliseur à retour de décisions selon la revendication 16, caractérisé en ce que ladite fonction prédéterminée f est une fonction renforçant l'effet des fortes confiances et diminuant l'effet des faibles confiances.

19. Egaliseur à retour de décisions selon la revendication 18, caractérisé en ce qu'au moins une desdites fonctions prédéterminées g et g' est une fonction sigmoïde.

20. Egaliseur à retour de décisions selon l'une quelconque des revendications 4 à 19, on tient compte de deux distances, correspondant chacune à deux composantes définies respectivement selon deux axes perpendiculaires.

21. Egaliseur à retour de décisions selon la revendication 20, caractérisé en ce que ladite information de confiance est avantageusement décomposée en deux composantes (I, Q):

$$CI_y = \min(dx^+, dx^-)/\Delta$$

$$CQ_y = \min(dy^+, dy^-)/\Delta$$

où :

   $dx^+$, $dy^-$, $dx^-$, et $dy^+$, sont les quatre distances, selon les axes x et y, entre ladite donnée égalisée et la frontière définissant la zone d'association d'une donnée audit symbole le plus probable ;
   $\Delta$ est la distance entre ladite frontière et ledit symbole le plus probable.

22. Egaliseur à retour de décisions selon la revendication 21 caractérisé en ce que ladite donnée pondérée alimentant ledit filtre récursif (FB) est également décomposée en deux composantes :

$$Y_{récursif}I = g_1(CI_y)(yI') + (1-g_2(CIy))(yI)$$

$$Y_{récursif}Q = g_3(CQ_y)(yQ') + (1-g_4(CQ_y))(yQ)$$

où yI' et yQ' sont les deux composantes dudit symbole le plus

   probable ;
   yI et yQ sont les deux composantes de ladite donnée égalisée ;
   $g_1$, $g_2$, $g_3$, $g_4$ sont des fonctions prédéterminées.

23. Egaliseur à retour de décisions selon la revendication 22, caractérisé en ce qu'au moins une desdites fonctions prédéterminées $g_1$, $g_2$, $g_3$ et $g_4$ est la fonction identité.

24. Egaliseur à retour de décisions selon la revendication 22, caractérisé en ce qu'au moins une desdites fonctions prédéterminées $g_1$, $g_2$, $g_3$ et $g_4$ est une fonction renforçant l'effet des fortes confiances et diminuant l'effet des faibles confiances.

25. Egaliseur à retour de décisions selon la revendication 24, caractérisé en ce qu'au moins une desdites fonctions prédéterminées $g_1$, $g_2$, $g_3$ et $g_4$ est une fonction sigmoïde.

26. Egaliseur à retour de décisions selon l'une quelconque des revendications 23 à 25 caractérisé en ce que lesdites fonctions $g_1$ et $g_2$ et/ou lesdites fonctions $g_3$ et $g_4$ sont la même fonction.

27. Egaliseur à retour de décisions selon l'une quelconque des revendications 22 à 26, caractérisé en ce que l'optimisation d'un critère de qualité consiste à minimiser les deux éléments :

$$erreurl = f_1(CI_y)(yl'-yl)$$

$$erreurQ = f_2(CQ_y)(yQ'-yQ)$$

où $f_1$ et $f_2$ sont des fonctions prédéterminées.

28. Egaliseur à retour de décisions selon la revendication 27, caractérisé en ce qu'au moins une desdites fonctions prédéterminées $f_1$ ou $f_2$ est la fonction identité.

29. Egaliseur à retour de décisions selon la revendication 27, caractérisé en ce qu'au moins une desdites fonctions prédéterminées $f_1$ ou $f_2$ est une fonction renforçant l'effet des fortes confiances et diminuant l'effet des faibles confiances.

30. Egaliseur à retour de décisions selon la revendication 29, caractérisé en ce qu'au moins une desdites fonctions prédéterminées $f_1$ ou $f_2$ est une fonction sigmoïde.

31. Egaliseur à retour de décisions selon l'une quelconque des revendications 28 à 30 caractérisé en ce que lesdites fonctions $f_1$ et $f_2$ sont la même fonction.

32. Egaliseur à retour de décisions selon l'une quelconque des revendications 4 à 9 et l'une quelconque des revendications 10 à 31, caractérisé en ce qu'il comprend des premiers moyens de calcul de ladite information de confiance, tenant compte d'au moins d'une distance (d) entre ladite donnée égalisée et le symbole le plus probable correspondant à ladite donnée,
et des seconds de moyens de calcul de ladite information de confiance calculant l'expression :

$$C_y = \frac{Min\ (dx^+, dy^-, dx^-, dy^+)}{\Delta}$$

où :

dx$^+$, dy$^-$, dx$^-$, et dy$^+$, sont les quatre distances, selon les axes x et y, entre ladite donnée égalisée et la frontière définissant la zone d'association d'une donnée audit symbole le plus probable ;
$\Delta$ est la distance entre ladite frontière et ledit symbole le plus probable.

33. Egaliseur à retour de décisions selon l'une quelconque des revendications 4 à 32, caractérisé en ce qu'on traite différemment lesdites données égalisée, lorsque celles-ci se trouvent à l'extérieur de la constellation définie par les symboles possibles.

34. Egaliseur à retour de décisions selon la revendication 33, caractérisé en ce que les données se trouvant à l'extérieur de ladite constellation sont projetées sur le bord le plus proche de ladite constellation.

35. Egaliseur à retour de décisions selon la revendication 34, caractérisé en ce que, après projection, on détermine une donnée pondérée de la même façon que pour les données se trouvant à l'intérieur de ladite constellation.

36. Procédé d'égalisation à retour de décisions, caractérisé en ce qu'il comprend les étapes suivantes :

- filtrage direct (FF) (11) de données d'entrée ;
- filtrage récursif (FB) (12) ;
- délivrance de données égalisées (y') correspondant à la somme (15) des sorties desdits filtrages direct (11) et récursif (12) ;
- détermination (13) des coefficients de filtrage desdits filtrages direct et récursif ;

caractérisé en ce qu'il comprend les étapes de :

- détermination (21) d'une information représentative de la confiance affectée à chaque donnée égalisée ;
- délivrance audit filtrage récursif d'une donnée pondérée ($y_{récursif}$), tenant compte de ladite donnée égalisée (y') et de ladite information de confiance.

Fig. 1

Fig. 2

Fig. 3

Fig. 4

Fig. 5A

EP 1 024 631 A1

Fig. 5B

EP 1 024 631 A1

Fig. 5C

Fig. 5D

Fig. 5E

EP 1 024 631 A1

## RAPPORT DE RECHERCHE EUROPEENNE

Office européen des brevets

Numéro de la demande

EP 00 46 0012

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | E.DAHLMAN, B.GUDMUNSON: "Performance improvement in decision feedback equalisers by using soft decision" ELECTRONICS LETTERS, vol. 24, no. 17, 18 août 1988 (1988-08-18), XP002130204 Stevenage, GB * abrégé; figure 2 * * page 1084, colonne de gauche, alinéa 3 * * page 1084, colonne de droite, alinéa 1 – alinéa 3 * | 1-8, 33-36 | H04L25/03 H04L25/06 |
| A | | 9-32 | |
| A | OH K N ET AL: "NEW BLIND EQUALIZATION TECHNIQUES BASED ON CONSTANT MODULUS ALGORITHM" IEEE GLOBAL TELECOMMUNICATIONS CONFERENCE (GLOBECOM),US, IEEE,1995, pages 865-869, XP000622917 New York ISBN: 0-7803-2510-9 * abrégé; figures 2,3 * *Le paragraphe "Constant Modulus Algorithm"* *Conclusion* | 1-36 | |
| A,D | LABAT J ET AL: "ADAPTIVE DECISION FEEDBACK EQUALIZATION: CAN YOU SKIP THE TRAINING PERIOD?" IEEE TRANSACTIONS ON COMMUNICATIONS,US,IEEE INC. NEW YORK, vol. 46, no. 7, 1 juillet 1998 (1998-07-01), pages 921-930, XP000779692 ISSN: 0090-6778 * abrégé * *Conclusion* | 1-36 | |

DOMAINES TECHNIQUES RECHERCHES (Int.Cl.7)

H04L

-/--

Le présent rapport a été établi pour toutes les revendications

| Lieu de la recherche | Date d'achèvement de la recherche | Examinateur |
|---|---|---|
| BERLIN | 28 avril 2000 | Binger, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

17

EP 1 024 631 A1

| | Office européen des brevets | RAPPORT DE RECHERCHE EUROPEENNE | Numéro de la demande EP 00 46 0012 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | XIAODONG WANG, RICHARD SPENCER: "A Post-DFE Path Comparison Detection Algorithm" INTERNATIONAL CONFERENCE COMMUNICATION TECHNOLOGY, vol. s13, no. 10, 22 - 22 octobre 1998, pages 1-5, XP002130205 Beijing,china * abrégé; figure 1 * *Conclusion* | 1-36 | |
| | | | DOMAINES TECHNIQUES RECHERCHES (Int.Cl.7) |

Le présent rapport a été établi pour toutes les revendications

| Lieu de la recherche | Date d'achèvement de la recherche | Examinateur |
|---|---|---|
| BERLIN | 28 avril 2000 | Binger, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

18